**Europäisches Patentamt**

**European Patent Office**

**Office européen des brevets**

(19)

(11) Publication number : **0 400 034 B1**

# EUROPEAN PATENT SPECIFICATION

(12)

(45) Date of publication of patent specification :
09.09.92 Bulletin 92/37

(51) Int. Cl.⁵ : **B21D 53/06,** B23P 15/26,
F28D 7/10

(21) Application number : 89902085.3

(22) Date of filing : 30.01.89

(86) International application number :
PCT/NO89/00012

(87) International publication number :
WO 89/07022 10.08.89 Gazette 89/18

(54) **METHOD FOR THE PROTECTION OF A COILED TUBE HEAT EXCHANGER.**

(30) Priority : 01.02.88 NO 880413

(43) Date of publication of application :
05.12.90 Bulletin 90/49

(45) Publication of the grant of the patent :
09.09.92 Bulletin 92/37

(84) Designated Contracting States :
BE CH DE FR GB IT LI NL SE

(56) References cited :
DE-A- 3 114 297
DE-A- 3 227 619

(56) References cited :
GB-A- 1 530 134
GB-A- 2 080 509
US-A- 950 225
US-A- 2 259 433

(73) Proprietor : SHIPCO A/S
Ostre Strandgate 12A
N-4600 Kristiansand (NO)

(72) Inventor : SMITH-OVLAND, Nils, Henrik
Manganveien 31
N-4629 Kristiansand (NO)

(74) Representative : Barlow, Roy James et al
J.A. KEMP & CO. 14, South Square, Gray's Inn
London WC1R 5LX (GB)

EP 0 400 034 B1

Jouve, 18, rue Saint-Denis, 75001 PARIS

## Description

The invention in question concerns the manufacture of a tubular heat exchanger as for example known from GB-A-1530 134 and specially suited to conditions where there are major requirements for a high level of heat recovery, and for problem-free operation in connection with large variations in the relative amounts of the substances in the heat exchanger, as, for example, the percentage proportion of solid material in a slurry, where the substances are corrosive, and where the process is automatic for problem-free operation in connection with starting and stopping.

It is normal that, where cooling or heating is concerned, the substances in the cooling tube must move themselves with a high linear speed relative to the exchanger's surface, This means that the exchanger should be long, but this is impractical. The exchanger is thus, in many cases, twisted into a spiral so that one achieves the criteria mentioned above, but within a smaller space. Such a spiral is, then, normally inside a tank, and the exchange of heat takes place between the substance in the tank and the spiral. However, the linear speed of the substance in the tank, relative to the outer surface of the spiral, is considerably less, and an agitator is fitted to increase this. This renders such a construction both expensive and complicated.

Of course, the agitator tank can also take the form of a smaller tube, through which the substance is pumped so quickly that an effective heat exchange is created, but e.g. at the cost of large quantities of coolant. The ideal solution would be for the diameter of the tube for a substance to be in accordance with its relative need for heat transfer to another substance.

This can be achieved by making a spiral-formed tubular heat exchanger with one or more spiral-formed exchangers contained within this first spiral-formed exchanger. In this way one achieves high linear speeds for effective heat exchange, the possibilities of optimal heat exchange between corrosive substances and relatively inert substances through the choice of the spiral material, and, by no means least, the fact that the pitch of the spiral can be made less than the slip angle of possible solid material in a slurry or gas, so that, should operation be interrupted or brought to a halt, this solid material will not slide down and block the heat exchanger, but will quite simply remain at the base of the tube. Upon starting up, the slurry/gas will be able to pass freely through the upper part of the tube, gradually taking the slurry with it in order thus to be able to restart without problems.

The FI-A-74,805, the DE-A-30 27 070, 31 14 297 and 32 27 119, detail known tubular heat exchangers which are manufactured by means of one or more tubes with a smaller diameter being housed within an outer tube, whereupon the tube combination is coiled or structured to the required spiral shape.

The method in question involves, briefly, the separate forming into a spiral of the tube. which is to be outermost, together with the separate forming into a spiral or spirals of the thinner tube or tubes, which are to be found within this outer tube, in order thereafter to screw the thinner tube spiral or spirals into the outer spiral. Thereafter the necessary supports/outer spacers and necessary flanges are mounted in the known manner.

The manufacture of the new tubular heat exchangers is illustrated by reference to the attached figures.

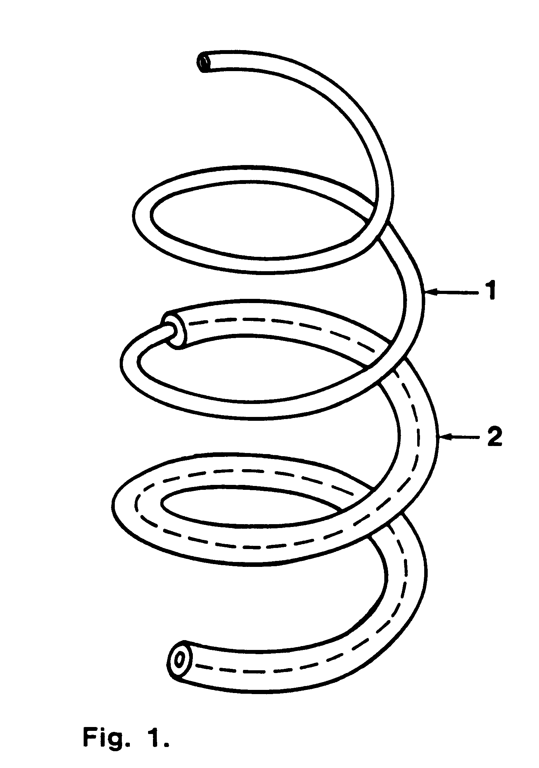

Fig. 1 shows an inner tube (1) which is partially screwed into the outer tube (2).

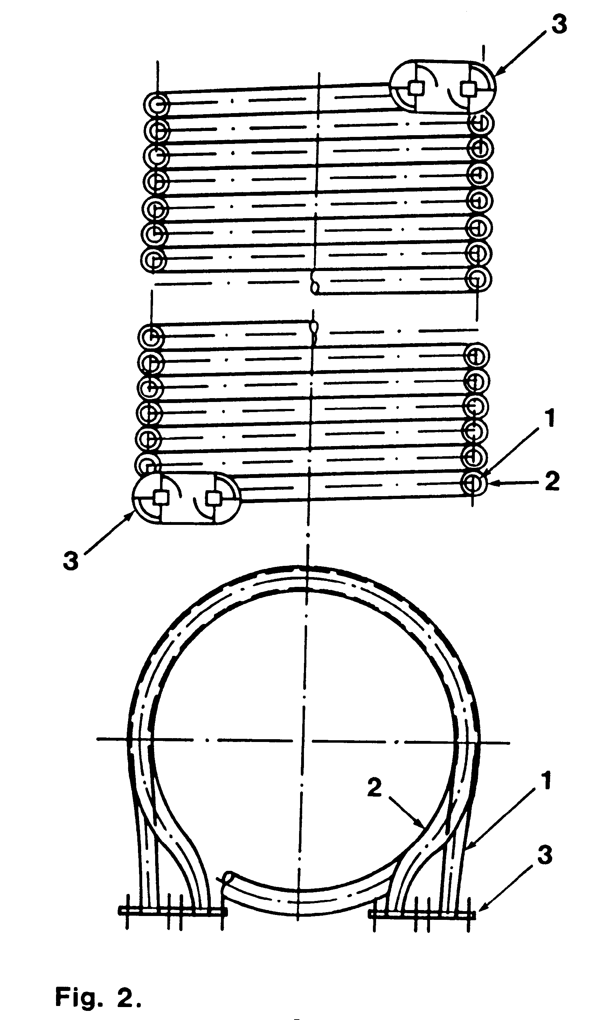

Fig. 2 shows a typical, ready mounted tubular heat exchanger, where (1) is the inner tube and (2) is the outer tube and (3) is a flange.

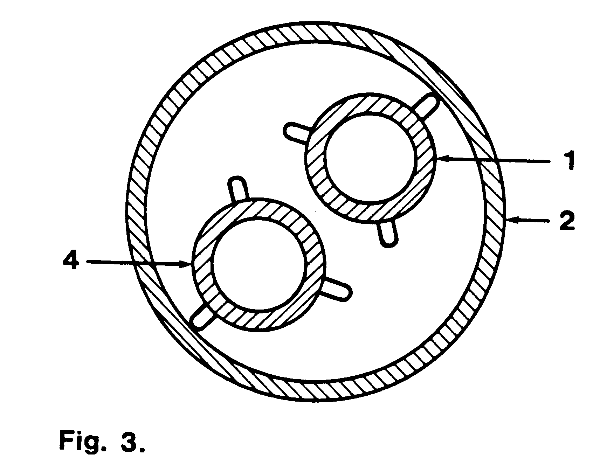

Fig. 3 shows a cross-section of a multi-tube where (2) is the outer tube and (1) is the inner tube and (4) is an extra inner tube. The inner tubes (1) and (4) are fitted with spacers which separate the tubes from one another.

The principle involved in screwing two spirals with approximately the same diameter and the spiral pitch of tubes of different diameters, and thereafter screwing the individual spiral-formed tubes together in order thus to achieve a multitubular heat exchanger, is itself the essence of the invention in question.

The choice of tube materials is, of course, dependent upon the substance which is to be heat exchanged (cooled/heated). Here, for example, a titanium spiral for a corrosive slurry may be screwed into a plastic spiral for cooling water.

If one of these spirals Bets damaged, it is a simple matter to unscrew the damaged spiral and replace it with a new one (or, possibly, repair the old one). This makes assembly and dismantling simple.

In order to avoid possible solid matter in a substance (slurry), which is to be heat-exchanged in the tubular heat exchanger, causing a blockage, it is preferable for the pitch of the spiral rings to be less than the slip angle for this solid matter in the substance, so that in the event of a halt to the operation, the solid matter does not slip down through the spiral and block it, but just remains at the bottom of the tube without blocking it.

The invention in question is, naturally, not limited by this since spirals with a very large pitch can also be constructed by means of the method under discussion.

The method in question thus represents a simple and cheap method in respect of the manufacture of the tubular heat exchanger concerned, and the repair of a damaged spiral can be effected quickly and simply, which is why a tubular heat exchanger manufactured in accordance with the invention in question represent a cheaper and simpler alternative compared to known tubular heat exchangers and will, as a consequence of its mechanical construction, also display greater heat recovery, greater flexibility in respect of slurry or corrosive substances, and display a less problematical start/stop function for automatic processes.

## Claims

1. The method of manufacturing a tubular heat exchanger consisting of an outer tube (2) and at least one inner tube (1, 4) possibly furnished with spacers, in which the inner diameter of the outer tube (2) is greater than the outer diameter of the inner tube (1), or is greater than the sum of the outer diameters of the inner tubes (1) and (4), **characterised in** that the outer tube (2) is formed separately to a spiral and at least one inner tube (1, 4) is separately formed to a spiral with the same pitch as the spiral formed by the outer tube (2) and with a spiral diameter which is such that the circumference of the inner tube (2), whereafter the spiral formed by the inner tube (1, 4) is screwed into the spiral formed by the outer tube (2).

2. The method in accordance with claim 1, **characterised in** that the ends of the outer spiral-tube (2) and the ends of at least one of the inner spiral-tubes (1) are fitted with known, per se, attachment and sealing arrangements (3).

## Patentansprüche

1. Verfahren zur Herstellung eines Rohrwärmeaustauschers, der aus einem äußeren Rohr (2) und wenigstens einem inneren Rohr (1, 4), das möglicherweise mit Abstandhaltern versehen ist, besteht, wobei der Innendurchmesser des äußeren Rohres (2) größer als der Außendurchmesser des inneren Rohres (1) oder größer als die Summe der Außendurchmesser der inneren Rohre (1) und (4) ist, **dadurch gekennzeichnet**, daß das äußere Rohr (2) separat zu einer Spirale geformt wird und wenigstens ein inneres Rohr (1, 4) separat zur einer Spirale mit dem gleichen Spiralanstieg wie der der vom äußeren Rohr (2) gebildeten Spirale und mit einem solchen Spiralendurchmesser, daß der Umfang des inneren Rohres (1, 4) innerhalb des Umfanges des äußeren Rohres (2) liegt, geformt wird, wonach die durch das innere Rohr (1, 4) gebildete Spirale in die durch das äußere Rohr (2) gebildete spirale gedreht wird.

2. Verfahren nach Anspruch 1, **dadurch gekennzeichnet**, daß die Enden des äußeren Spiralrohres (2) und die Enden wenigstens eines inneren Spiralrohres (1) mit an sich bekannten Anordnungsund Abdichtvorrichtungen (3) montiert werden.

## Revendications

1.- Procédé pour fabriquer un échangeur de chaleur tubulaire, constitué par un tube extérieur (2) et au moins un tube intérieur (1,4), éventuellement équipé d'entretoises, dans lequel le diamètre intérieur du tube extérieur (2) est plus grand que le diamètre extérieur du tube intérieur (1), ou est plus grand que la somme des diamètres extérieurs des tubes intérieurs (1) et (4), caractérisé en ce que le tube extérieur (2) est formé séparément en un serpentin et qu'au moins un tube intérieur (1,4) est formé séparément en un serpentin ayant le même pas que le serpentin formé par le tube extérieur (2) et ayant un diamètre tel que la circonférence du tube intérieur (1,4) tombe à l'intérieur de la circonférence du tube extérieur (2), après quoi le serpentin formé par le tube intérieur (1,4) est vissé dans le serpentin formé dans le tube extérieur (2).

2.- Procédé selon la revendication 1, caractérisé en ce que les extrémités du tube extérieur formé en serpentin (2) et les extrémités d'au moins l'un des tubes intérieurs formé en serpentin (1) sont équipées de dispositifs de fixation et d'étanchéité connus en soi (3).

1

2

Fig. 1.

**Fig. 2.**

**Fig. 3.**